# EUROPEAN PATENT APPLICATION

(11) **EP 1 098 500 A2**
(43) Date of publication of application: **09.05.2001**
(21) Application number: 00309681.5
(22) Date of filing: 02.11.2000
(51) Int. Cl.: H04M 3/22

(54) **Identifying telephone numbers of telephone lines and creating an inventory database**

(30) Priority: 03.11.1999 IL 13272599
(71) Applicant: ECI Telecom Ltd., Petach Tikva 49517 (IL)
(72) Inventor: Melman, Ofer, Yahud 56451 (IL)
(74) Representative: Potter, Julian Mark

(57) **Abstract**

The invention relates to a method, a control device and a system for automatically identifying a directory telephone number of a particular telephone line in an access network, for easily creating an inventory system. The access network includes a local exchange (12, 72, 94) capable of serving a plurality of directory telephone numbers and connected to at least one exchange unit EU (14, 54, 96) for supporting through the EU a number of telephone lines. The control device (26, 30, 40, 58, 80) is adapted for telecommunication with the EU, and is provided with a caller identification CLI port (29, 35, 86) of a particular check telephone number (28, 33, 44) assigned in the local exchange. The control device is capable of causing any specific line of the telephone lines belonging to the EU to dial the check telephone number; the check number is operative to automatically identify, by its CLI port, the directory telephone number of the calling telephone line and to associate the identified directory number with the specific telephone line which has dialed the check telephone number.

## Description

The present invention relates to a technology for managing access telecommunication networks, more particularly, but not exclusively, to a method and a system for creating an inventory database and monitoring configuration of access equipment associated with a local exchange.

The terms which will often be used in the present description and claims are explained herein below:
Local Telephone Exchange (LE) - equipment which, via an access network, performs interconnection between a subscriber's number belonging to the LE and any other telephone number; the local exchange can also be called Switch, Switchboard or Central Office;
EU - a multiplexing/demultiplexing Exchange Unit situated at or in the vicinity of a local exchange;
RU - a multiplexing/demultiplexing Remote Unit situated at remote subscriber's premises or in their vicinity;
POTS - Plain Old Telephone Service, intended for supporting one subscribers line using a regular twisted pair of wires
ISDN- Integrated Services Digital Network;
Pair gain - technology enabling supporting more than one telephone numbers using a regular twisted pair of wires.

Up to present, inventory information on configuration of access networks (such as lists of EU shelves, EU blocks, RU blocks associated with a particular local exchange, and interconnections there-between) has been collected and manually recorded by technicians. The information has been usually concentrated and updated when performing corrections or modifications in the system, to be further stored in any data base.

Usually, only partial information about details of a particular reconfiguration is recorded by the technicians. For example, in case where a new subscriber line is provided with a terminal and connected to the local exchange, the particular access configuration which is activated between the subscriber and the exchange will comprise a chain of links. However, only some of these links are usually recorded while others remain neglected and thus unknown. This situation leads to reducing the system's efficacy since, very often, there is no information concerning small changes which have recently been effected in the access equipment, and no answer to the question whether any additional subscriber lines can be created using the available equipment, or a new equipment is to be brought. In such a situation with inventory management of access networks it is very difficult to speak about determining and/or improving quality of particular lines.

An attempt has been made by telecommunication companies (for example, by British Telecommunications Ltd.) to collect the mentioned inventory data concerning local access networks and to register it, on a periodical basis, in a centralized database. The centralized database is part of a management system that controls a number of access networks. Examples of disadvantages of such a centralised database are:
a) it is never complete, since is designed to accumulate information being manually collected and keyed-in;
b) it even cannot be up-to-date owing to the periodical character of forming and updating thereof;
c) a fault in the central data base constitutes a problem for local administration and technicians, if any operative information is required.

One particular difficulty of the inventory management is to correlate a particular subscriber's telephone number and configuration of the chain of links in the access network which forms connection between the terminal having the number and the local exchange.

US Patent 5,289,372 describes a non-manpower equipment tracking system that provides for configuration management control over a plurality of pieces of equipment and in a geographically dispersed environment. The system is described with reference to a global computer equipment tracking system. It includes a plurality of sets of sensors, a plurality of connectors, each individually coupled to a selected set of sensors, a concentrator coupled to the plurality of collectors, and a computer having a database for storing sensor data and coupled to the concentrator by way of a communication link. Each sensor is attached to a piece of equipment and each sensor has a unique ID code. Each collector is adapted to read out the ID code of each of the associated sensors at selected times, and store the changes for those sensors that have changed since the prior reading. The concentrator communicates with the plurality of collectors and causes the collectors to transmit the changed information. The system automatically communicates configuration change information to a centralized database which correlates the changes.

US Patent 5,761,432 describes a combined system for providing efficient management of telecommunication network resources, which comprises a plurality of workstations situated in different local area networks and communicating with a central server which, *inter alia*, includes an inventory management subsystem. The inventory management subsystem is provided with means for tracking of the use and availability of telecommunication network components and is designed to interact with other subsystems (such as an order management one). The inventory information management supports additions and changes to SDI (Service Design and Inventory system) database and enables tracking of the use and availability of network components and components' status through the use of queries and reports. It also manages the physical inventory items and permits browsing and updating with respect to such items as: trunk groups, equipment data, link data, back-to-back routing data, project data, customer data and office data.

None of the systems described above provides a simple solution to a long felt need for inventory management of access networks and, particularly, no solution has been proposed enabling automatic inventory management of the access network configuration actual for a particular subscriber's number.

In one embodiment, the present invention provides a simple inexpensive technology (i.e., a method a device and a system) for collecting data on configuration of an access network related to a particular local exchange, and with respect to any specific directory telephone number supported by the local exchange.

In another embodiment, the invention enables the creation of a central inventory database, using the data collected with the aid of the inventive technology.

Further embodiments and features of the invention will become apparent to those skilled in the art, from the following description and the accompanying drawings.

The main embodiment of the invention can be achieved by providing a method of automatically identifying the directory telephone number of a particular telephone line in an access network, wherein the access network comprises a local exchange capable of serving a plurality of directory telephone numbers and connected to at least one exchange unit (EU) for supporting there-through a number of telephone lines, the method includes the following steps:
assigning a check telephone number in the local exchange,
providing a control device with a caller identification port (CLI) of said check telephone number;
causing any specific telephone line in said EU to dial said check telephone number, thereby allowing the control device to automatically identify the directory number of the telephone line which has dialed.

The method usually comprises a preliminary step of providing an inventory indication for each of said telephone lines in the EU.

Based on the above method, an inventory database of the access network can automatically be built by adding the following steps:
obtaining indication of the directory telephone number from the CLI and automatically registering thus identified directory telephone number in association with an inventory indication of the telephone line which has dialed the check number, thereby forming one data entry in the inventory database,
repeating the process with respect to another telephone line for forming a next data entry in the database, preferably- up to all said telephone lines are identified and the respective entries are registered in the inventory database.

The inventory database can be completed by providing each said data entry with additional inventory information on currently existing access network connections associated with the telephone line registered in said entry.

The above-mentioned additional inventory information on the access network connections may constitute inventory indication(s) (for example, serial numbers) of one or more respective items from the following non-exhaustive list: the EU in a shelf where it is accommodated, the shelf, the EU exit port incorporating said telephone line, a telecommunication path if connected to the EU exit port, a remote Unit (RU) if connected to the telecommunication path, the RU exit port, a subscriber line if connected to the exit port, a terminal if connected to the subscriber line.

In other words, any single entry in the inventory database (e.g., a serial number of a telephone line in the EU block, associated with the directory number of the line) may be fulfilled by appending to it additional data on the number of the EU block, coordinates of the EU block in the shelf, and so on up to the information whether a telephone apparatus (fax, computer) is connected to the corresponding subscriber's line at the user's premises.

Consequently, said inventory database will serve as a full inventory database of the local access network if it is further completed by introducing therein entries (preferably, with the additional inventory information if any) corresponding to all the telephone lines in all said EU blocks connected to said local exchange.

Finally, a central inventory database can be formed by integrating two or more said inventory databases. The inventive method preferably includes a step of transmitting data registered in the inventory database of said control device to a remote central database, for example via a telecommunication network. The data can be transmitted to the central database upon demand, periodically, or according to any preliminarily agreed schedule.

According to a second aspect of the present invention, there is provided a system for inventory management of an access network, wherein the access network includes a local exchange capable of serving a plurality of directory telephone numbers and connected to at least one exchange unit (EU) for supporting through said EU a number of telephone lines, the system comprises
a control device for automatically identifying the directory telephone number of a particular telephone line in an access network, the control device being adapted to communicate with said EU, and is provided with a caller identification (CLI) port of a check telephone number assigned in the local exchange;
the control device being capable of causing any specific line of said telephone lines of the EU to dial said check telephone number, said control device is operative to automatically identify the directory telephone number of the calling telephone line by the CLI port, and to associate said directory number with the specific telephone line which has dialed the check telephone number.

According to the preferred embodiment of the system, said control device comprises at least one communication port, a processor means, a memory block and is capable of automatically recording a data entry comprising said identified directory number in association with indication of the telephone line which has dialed the check number; thereby, an inventory database of the access network is formed by a plurality of the data entries respectively associated with said telephone lines.

Preferably, the indication of the telephone line is its serial number in the EU.

To prevent confusions caused by calls which might incidentally be placed on the check number, the control device may additionally comprise a timer for defining a maximal delay within which the line caused to dial the check number should be identified by the caller ID port.

Alternatively, or in addition, the control device may comprise an authentication port, while the telephone lines of said EU being adapted to generate signals to be recognized by the authentication port during the communication.

The control device can be designed as a separate block interconnected with the EU electrically, via optical fibers or wirelessly.

Alternatively, the control device may be installed in a shelf so as to be interconnected to the one or more EU blocks via motherboard of the shelf. It should be explained that the control device, if installed in the shelf, is interconnected with any of the EU blocks accommodated in the same shelf via the shelf's motherboard provided with say, RS-485 connector for exchanging control and inventory information there-between. Actually, the RS-485 bus connector enables connection of one control device to more than one shelves in the access network.

It should be mentioned that the telephone lines could be supported by said local exchange via POTS lines, as well as by any one of the interface protocols ISDN, E1, T1 and any other protocol where data time slots distribution is known in advance and constant, to enable exact and reliable identification of a telephone line with its directory number.

It is understood that complexity of the access network with respect to one or another telephone line may vary from an initial condition, when nothing is connected to a particular telephone line belonging to the EU, up to a condition when the line is activated and connected to a specific chain of links having a remotely located subscriber's terminal (telephone, fax, computer, etc). The individual phone number of the terminal corresponds is the directory telephone number of the mentioned line.

Therefore, the system may additionally comprise a plurality of link sensors distributed over the access network and adapted to interact with the control unit; said control unit being capable of processing information received from said sensors into additional inventory information on currently existing access network links associated with said telephone lines, and being operative to register the additional inventory information in the inventory database and in association with the respective data entries. Whenever any changes are effected in the access network, the inventory information in this data base will be automatically updated since the changes will be detected by sensors and information thereon will immediately be transmitted to the control device by the corresponding EU block.

It should, however, be mentioned that the principle of automatic detection the links by placing sensors at "joints" there-between, and the technology of collecting data from the sensors and registering thereof do not form part of the present invention and will not be described in the frame of the present application.

The above-described system would therefore be capable of automatically building and updating the inventory database in the control device , which in this embodiment collects the current inventory information on the existing configuration of links in the access network with respect to each and every telephone line. Since the control device is physically located in the local access network, both itself and its database will be readily available for any reference, if required for a local staff.

In accordance with yet another embodiment of the system, it further comprises a central management system with central memory means which may be positioned remotely from the access network, the central memory means being connected to one or more of said control devices via one or more telecommunication channels to enable transmitting data from the one or more control devices to the central memory means to form a central inventory database. Such a central database will facilitate central management of remote access networks.

Embodiments of the present invention also provide the control device *per se* for use in the above-described system.

Embodiments of the present invention will be further described and illustrated, by way of example only, with the aid of the following non-limiting drawings, in which:
**Fig. 1a** is a schematic block-diagram of one embodiment of an access network equipped with an inventory management system according to the invention.
**Fig. 1b** is a schematic block-diagram illustrating another and the preferred embodiment of the system according to the invention.
**Fig. 1c** represents yet another embodiment of the inventory management system.
**Fig. 2a** is a schematic pictorial representation showing one particular configuration of links in the access network formed between an EU block, positioned in a shelf, and a subscriber terminal.
**Fig. 2b** is an example of a table forming part of the inventory database built according to an embodiment of the invention.
**Fig. 3** is a schematic block diagram of the control device according to an embodiment of the invention.

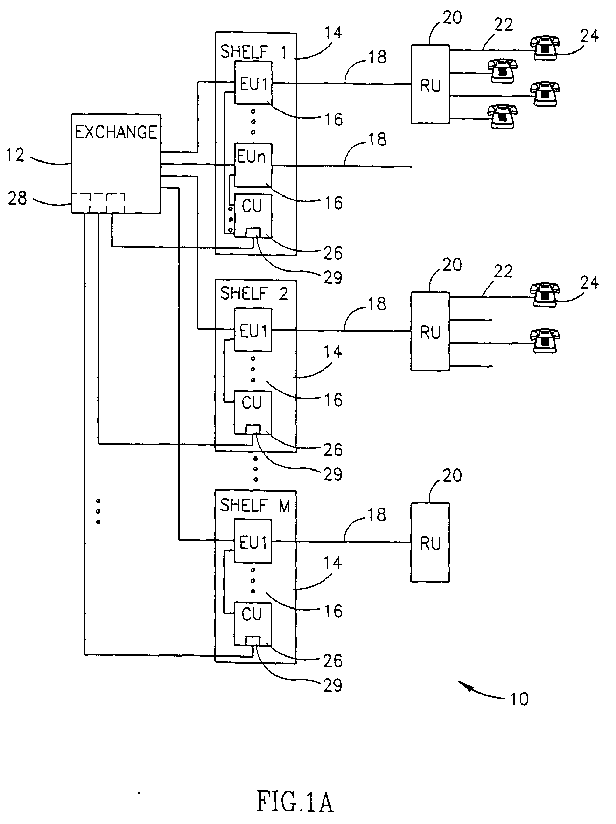

**Fig. 1a** illustrates an access network 10. It comprises the following components:
- a local exchange 12 (which may also be called a Switch or a Central Office),
- a plurality of shelves 14 situated close to the exchange 12 and each containing a number of EU blocks 16 accommodated in respective slots of the shelf,
- telecommunication paths 18 for connecting each of the EU blocks to an RU block 20 (if at all provided). Though the telecommunication path preferably comprises a pair gain or a DSL link, it may constitute a fiber cable, a wireless link, etc.
- subscriber lines 22 which can be provided at the output of each of the RU blocks, and
- subscriber terminals 24 (such as a telephone set, a computer, etc.) connected to some subscriber lines, respectively.

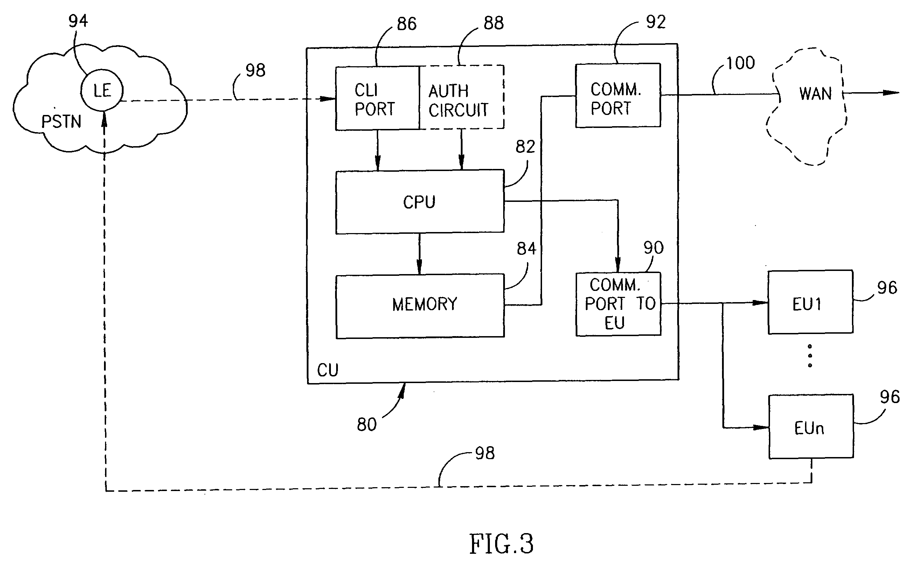

The access network is provided with a system for inventory management comprising a control device 26, structure of which is schematically illustrated in Fig. 3. The system is built by installing the control device 26 in each of the shelves, assigning in the local exchange a check telephone number for each of the shelves (schematically marked with three dotted contours 28), and providing caller ID ports (29) of these numbers in the respective control devices.
In this particular embodiment, each of the control devices (CU) 26 is accommodated in a corresponding shelf 14 and electrically interconnected with EU blocks 16 of the shelf (via its mother board which is not shown). The control devices can be designed as printed circuit plates shaped as EU blocks. Since each of the control devices (CU) 26 is connected to a particular check number provided in the exchange 12, and the check numbers are Caller ID enabled, any phone call coming to such a number will be identified and registered in the respective CU.

To build an inventory data base concerning each particular shelf, CU block 26 of that shelf initiates, one by one, a call from each telephone line (not shown) belonging to a particular EU in the shelf, to its related check number. The command from the CU 26 is forwarded to the EU via the motherboard of the shelf, and the ordered dialing is accomplished in a conventional manner. The dial to the check number promptly results in identifying the directory telephone number of the calling telephone line by the Caller ID port 29 of the CU 26. Indication of the identified directory number is then associated with the serial number of the telephone line which has just dialed the check number, and with additional information (if any) about the currently existing chain of links beyond the EU block. The above-mentioned information is stored in the memory of CU 26 as a data entry of the inventory database.

The additional inventory information on the access network configuration can be collected using sensors (not shown) at the points of connection of access equipment and comprise, for example, the following items (for each line of a particular EU block); serial number of the EU block in the shelf and how many EU blocks there are in the shelf, a place (slot) of location of this EU block, the number of a port of the EU block to which the line belongs and how many such ports are available in the EU, to which communication path (18) the particular port of the EU block is connected, whether the communication path (18) is provided with an RU block at its opposite end, what is the serial number of the RU block, how many ports are available in the RU block and which port is used, whether a subscriber line is connected to the port, is this line equipped by a terminal device (24).

If the sensors are provided, the inventory information (and the database, consequently) is continuously updateable since any changes physically effected in the links cause changes in the sensors' readings and updating in the CU records.
Each of the CU blocks is therefore a kind of hardware/software notebook storing data on the current condition of the access network related to a particular shelf thereof and available for use by local technicians.

Analysis of contents of the inventory database will allow obtaining the following exemplary information: a number of active EU blocks (lines and ports) in the shelf, which directory numbers are assigned (and to which lines) and which are still spare, how many subscriber lines are connected to the ports, how many of them are terminated by telephone devices and how many are spare, etc.

Each of the CUs 26 can be additionally adapted to transfer the data stored in the inventory databases to any central database for further processing.

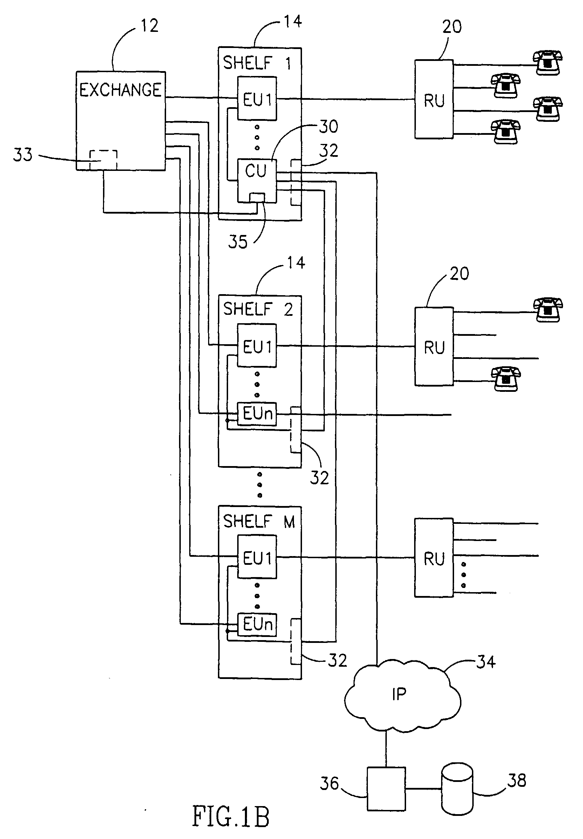

**Fig. 1b** illustrates another embodiment of the system, where the same access network as shown in Fig. 1a, is managed by one control device CU 30 (accommodated in Shelf 1) and electrically interconnected both to its shelf and other shelves Nos. 2 to M via motherboards 32 thereof. One common check number 33 is assigned in the local exchange, with its caller ID (CLI) port 35 being arranged in the CU 30.
EU blocks of the shelves, as well as the CU 30, are connected to the respective motherboards via a bus connector RS-485. The bus connector serves for transferring orders from the CU to EU blocks, for collecting additional information on the access network configuration, etc. In this embodiment, CU 30 is connected, via an external network (IP network 34 is shown) to an external centralized inventory management system 36 having a central database 38, for accumulating and processing the data obtained from inventory databases of one or more access networks. It should be noted that the CU 30 can be connected to the system 36 with another long distance communication path, for example a cable.

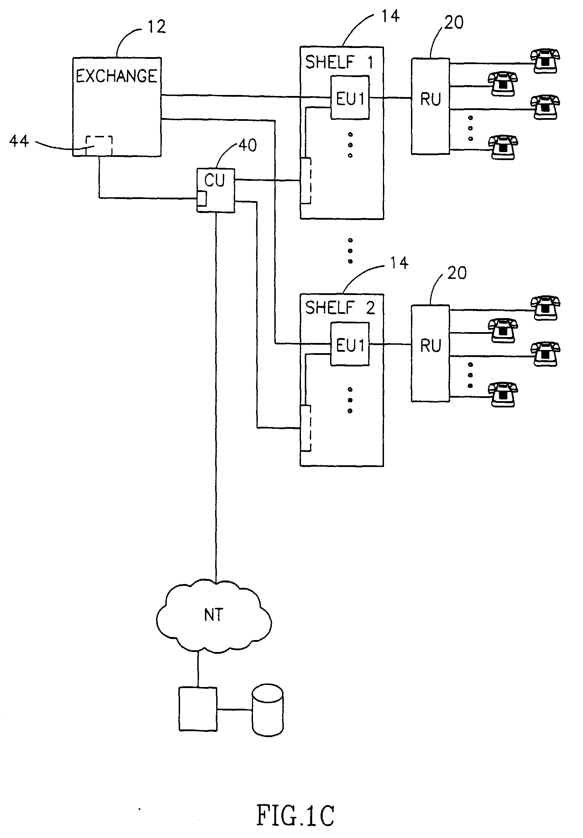

**Fig. 1c** illustrates yet another embodiment of the inventory management system, which slightly differs from those shown in Figs. 1a and 1b. In this embodiment, the CU block 40 (control device) is positioned separately and communicates with all shelves of the access network

Such a CU block is responsible for forwarding commands to, and collecting the inventory information from each of the shelves. It should be mentioned that, in the embodiments depicted in Figs. 1b and 1c, commands of dialing the check number 44 should preferably be released by the CU block in sequence, for accurately associating the identified directory number with the line which has just dialed the check number. (Compare to the system shown in Fig. 1a where CU blocks 26 are connected to independent check numbers, so that each of them may function in parallel with other CUs.)

Nevertheless, the system comprising only one control device, which is connected to the check telephone number and electrically interconnected with all the shelves of the system in a manner enabling collection, recording (and transmitting) inventory information on all the currently existing access network links, appears to be more economic.

If desired, the control device 26, 30, 40 may be provided with optional means for authentication the calling telephone line, in order to prevent mistakes in the inventory database which may be caused by any erroneous telephone calls to the check telephone number(s).

Communication with the external inventory management system and database is shown similar to that illustrated in Fig. 1b.

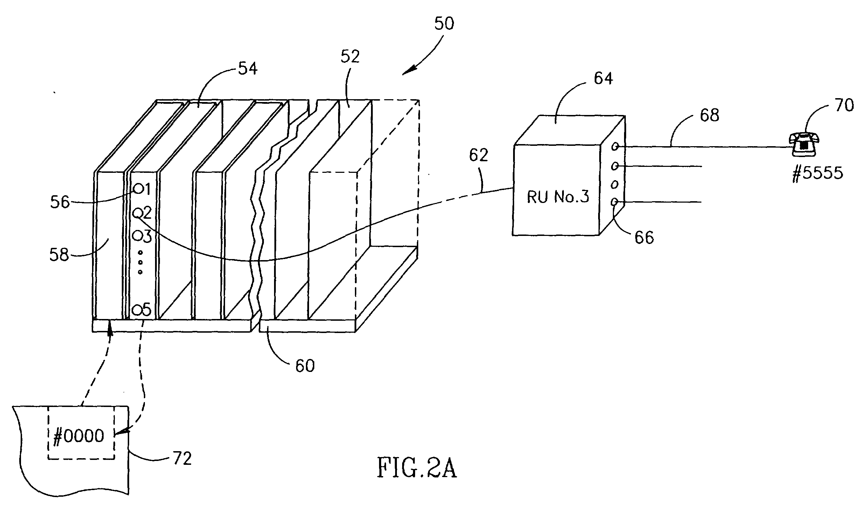

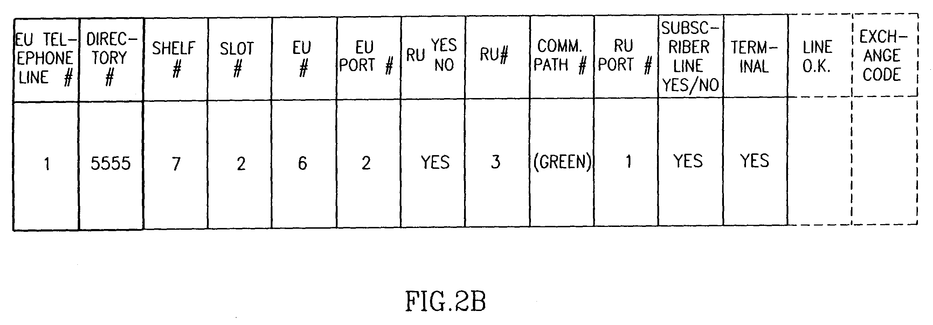

**Fig. 2a** illustrates examples of physical links of the access network, depicting what the inventory information may really comprise, and Fig. 2b shows how the particular inventory info, associated with the corresponding directory phone number, can be represented in local memory means of control devices to form the inventory database. The same structure can be utilized in the centralized database.
Fig. 2a schematically shows a perspective view of one shelf (say, shelf No.7 belonging to the local exchange) with a plurality of slots therein. The shelf No.7 is marked 50, and a slot is marked 52. Some of the slots comprise EU blocks, one of them (say, block EU No.6) is shown and marked 54; it has five ports marked 56. One of the slots comprises a control device (CU) 58. The EU blocks and the CU 58 are interconnected via a motherboard of the shelf (schematically marked 60). The CU 58 is thereby capable of issuing orders to and collecting inventory data from all EU blocks in the shelf, i.e., concerning all EU telephone lines (not shown), EU ports combining groups of multiplexed telephone lines, and further links to which the EU ports are connected. Hardware and software components responsible for transmitting orders and collecting the inventory information are not shown.
Port No.2 of EU No.6 is connected, via a communication path 62, to an RU block (say, numbered RU No.3) and marked 64. The RU block has four ports 66. One of the RU ports (port No.1) is active, and is provided with a subscriber line 68 terminating with a subscriber's terminal 70. Suppose, it is connected to an EU telephone line. Which directory number will be assigned to this subscriber? CU 58 is able to automatically identify the directory number for each telephone line.
How will the CU 58 perform it? Let's return to the shelf 50. CU 58 is capable of issuing and forwarding to any one of the EU blocks a command that one particular telephone line thereof (having a specific serial number) automatically dial a check number "0000" which is supported by the local exchange 72. The caller ID port of the check number is physically located at the CU 58, so the EU telephone line has actually called to the CU 58. Indication (say, "5555") of the directory phone number of the telephone line which has just called the check number will be received at CU 58, and then two main "columns" forming a data entry of the inventory database can be built. Fig. 2b represents the data entry in the form of two main columns "serial number of EU telephone line" and "directory number", to which additional inventory information is appended. The inventory database comprises many similar entries and is stored in a memory means of the CU 58.

**Fig. 2b** shows which information can be collected by the CU 58 to form the inventory database. The inventory database comprises a plurality of lists or tables each intended to describe configuration of links formed by a particular telephone line in the access network, together with the directory telephone number associated with this particular line.

The inventory database may comprise tables of different complexity (say, chains of links are longer or shorter), for example only the basic data entry "line-directory number" is registered, but a particular port of the EU block is not connected to anything. Such information accumulated in the control device would mean that the available equipment of the access network still has some spare facilities.

Referring now to the table shown in Fig. 2b, its two main columns will comprise indication of the telephone line (say, 1) and indication of the directory number of this line (say, 5555). Further, there can be registered the number of the shelf (7), a slot number (say, 2) the number of the EU block (6), EU port number corresponding to the line (say, 2), the indication of the communication path (say, green) , the fact of presence of RU block, its number (3), the number of RU port (1), the presence or absence of the subscriber's local line and terminal. If the terminal is present, it can, of course, be called to by using the directory telephone number (5555). Optionally, the table may comprise a column indicating the quality of this particular registered line and also the number of the local exchange, if the information is to be further transferred to a central data base.
Similar tables can be stored in the CU for each and every telephone line available in the access network.

**Fig. 3** illustrates a schematic block-diagram of the control device CU (80) according to an embodiment of the invention. The device comprises a central processing unit CPU 82 and memory 84, a caller ID port (CLI port) 86, an optional authentication circuit 88 and communication ports 90 and 92. The control device can be a desktop unit, for example constructed from a PC computer, communication boards and a regular dial-up modem as a caller ID port.
In the drawing, Local Exchange (LE) 94 is shown as part of a conventional PSTN (Plain Service Telephone Network): EU blocks are schematically marked 96. The communication port 90 is used for interconnecting between CU 80 and any of the EU blocks 96 (via RS 485, optic fibers etc). The telecommunication port 92 is intended for transferring data from the memory 84 to a local or remote recipient via a telecommunication path 100 suitably designed for the purpose. The data may be transmitted say, via a local area network LAN, or a wide area network WAN (as shown in the drawing).

The central processing unit 82 issues a command to a particular line in a specific EU to dial a check number. The command is passed via the communication port 90 and causes a specified telephone line in the specified EUₙ to dial the check number. The initiated call (schematically marked 98) follows from the EUₙ via the PSTN and the LE 94 and arrives to the CLI port 86 of the control device 80. CPU 82 receives the identified directory number from the CLI 86 and, if the CLI reacted in a predetermined period of time after the dial command was issued, the CPU associates the identified directory number with the specified line and records the data entry in the memory 84. Optionally, in order to prevent registering a wrong directory number in case an erroneous call is co-incidentally placed to the check number, the EU telephone lines can be adapted to transmit an authentication voice signal (say, DTMF). Such a signal is then to be received and decoded by the specifically designed authentication circuit 88. The circuit 88 may comprise a DTMF circuit, a modem, etc. The data entry will then be recorded in the memory 84 only if the circuit 88 approves that the calling telephone line belongs to EU.

It should be appreciated that while embodiments of the present invention have been described with reference to particular examples which, for the sake of simplicity, employ the POTS interface between the Local Exchange and EU units, and a so-called pair-gain system interconnecting EU blocks to remote units, other interfacing and telecommunication options are possible.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method of automatically identifying a directory telephone number of a particular telephone line in an access network, wherein the access network comprises a local exchange (12, 72, 94) capable of serving a plurality of directory telephone numbers and connected to at least one exchange unit (EU) (14, 56, 96) for supporting there-through a number of telephone lines, the method includes the following steps:
assigning a check telephone number (28, 33, 44) in the local exchange,
providing a control device ( 26, 30, 40, 58, 80) with a caller identification port (CLI) (29, 35, 86) of said check telephone number;
causing any specific telephone line in said EU to dial said check telephone number, thereby allowing the control device to automatically identify the directory number of the telephone line which has dialed.

2. The method according to Claim 1, comprising a preliminary step of providing an inventory indication of each of said telephone lines in the EU.

3. A method of building an inventory database of an access network, comprising the steps of the method according to Claim 2 and additional steps of:
obtaining indication of the directory telephone number from the CLI and
automatically recording thus identified directory telephone number in association with an inventory indication of the telephone line which has dialed the check number, thereby forming one data entry in the inventory database,
repeating the process with respect to another telephone line for forming a next data entry in the database.

4. The method according to Claim 3, comprising a step of completing each said data entry with additional inventory information on currently existing access network connections associated with the telephone line recorded in said data entry.

5. The method according to Claim 3 or 4, comprising completing the inventory database by introducing therein entries corresponding to all the telephone lines in all said EU blocks connected to said local exchange.

6. The method according to any one of Claims 3 to 5, comprising a step of forming a central inventory database by transmitting data recorded in one or more said inventory databases to a remote central database via a telecommunication network (34, 100) for integrating the transmitted data.

7. A control device (26, 30, 40, 58, 80) for automatically identifying a directory telephone number of a particular telephone line in an access network, wherein the access network includes a local exchange (12, 72, 94) capable of serving a plurality of directory telephone numbers and connected to at least one exchange unit (EU) (14, 56, 96) for supporting through said EU a number of telephone lines,
said control device is adapted for telecommunication with said EU, and is provided with a caller identification (CLI) port (29, 35, 86) of a particular check telephone number (28, 33, 44) assigned in the local exchange;
the control device being capable of causing any specific line of said telephone lines of the EU to dial said check telephone number, being operative to automatically identify the directory telephone number of the calling telephone line by the CLI port, and to associate said directory number with the specific telephone line which has dialed the check telephone number.

8. The control device according to Claim 7, comprising at least one communication port (90) for interconnection with said at least one EU, a processing unit (82) and a memory block (84), and being capable of automatically recording a data entry comprising said identified directory number in association with indication of the telephone line which has dialed the check number; the control device being thereby adapted to form an inventory database of the access network by recording a plurality of the data entries respectively associated with said telephone lines.

9. The control device according to any one of Claims 7 to 8, additionally comprising a timer for defining a maximal delay within which the telephone line caused to dial the check number may be identified by the CLI port, thereby minimizing confusions which might result from calls incidentally placed to the check number.

10. The control device according to any one of Claims 7 to 9, further comprising an authentication port (88) for recognizing telephone lines if generating suitable signals during the communication.

11. The control device according to any one of Claims 8 to 10, further capable of completing each said data entry in the inventory database with additional inventory information on currently existing access network connections (56, 62, 64, 68, 70) associated with the telephone line recorded in said data entry, and automatically updating said data entries.

12. The control device according to any one of claims 7 to 11, further provided with a communication port (92) for interconnection with a remote management system.

13. The control device according to any one of Claims 7 to 12, designed as a block (58) adapted to be installed in a shelf holding said at least one EU.

14. A system for inventory management of an access network, comprising the control device according to any one of Claims 7 to 13.

15. The system according to Claim 14, wherein the control device is installed in a shelf (50) of the access network so as to be electrically interconnected with said at least one EU (54).

16. The system according to Claim 14 or 15, additionally comprising a plurality of sensors distributed over the access network and adapted to interact with the control device for supplying and updating additional inventory information on currently existing access network links associated with said telephone lines; said additional inventory information being used for completing respective data entries of the inventory database.

17. The system according to any one of Claims 14 to 16, further comprising a central management system (36) with central memory means (38); the central memory means being connected to said control device via a telecommunication channel to enable transmitting data from the control device to the central memory means for forming a central inventory database.

18. A computer program comprising computer- or machine-readable computer program elements for configuring a computer to implement the method of any one of claims 1 to 6.

19. A computer program comprising computer- or machine-readable computer program elements translatable for configuring a computer to implement the method of any one of claims 1 to 6.

20. A carrier medium carrying a computer program according to claim 18 or 19.
